# EUROPEAN PATENT SPECIFICATION

(11) **EP 3 728 781 B1**
(45) Date of publication and mention of the grant of the patent: **15.11.2023**
(21) Application number: 18892148.0
(22) Date of filing: 11.12.2018
(51) Int. Cl.: E06B 9/42, E06B 9/34, H01M 50/207

(54) **MOTORIZED ROLLER BLIND WITH BATTERY COMPARTMENT**
MOTORISIERTES ROLLO MIT BATTERIEFACH
STORE À ROULEAU MOTORISÉ DOTÉ D'UN COMPARTIMENT DE BATTERIE

(30) Priority: 20.12.2017 SE 1751590
(43) Date of publication of application: 28.10.2020
(73) Proprietor: Inter IKEA Systems B.V., 2616 LN Delft (NL)
(72) Inventor: LARSSON, Paul, 245 45 Staffanstorp (SE)
(74) Representative: Ström & Gulliksson AB
(86) International application number: PCT/SE2018/051274
(87) International publication number: WO 2019/125272

(56) References cited:
- GB-A- 2 011 156
- GB-A- 2 011 156
- US-A1- 2006 121 337
- US-A1- 2006 121 337
- US-A1- 2009 014 132
- US-A1- 2009 014 132
- US-A1- 2014 231 032
- US-A1- 2014 231 032
- US-A1- 2014 305 602
- US-A1- 2014 305 602

## Description

### Field of the Invention

The present invention relates to a motorized roller blind comprising a battery compartment with a closable lid.

### Background

Commonly available motorized roller blinds often belong to one of two categories. On one hand, there are the battery-powered motorized roller blinds. On the other hand, there are the motorized roller blinds requiring fixed installation. Each category of motorized roller blinds has its own separate advantages and drawbacks. Fixed installation with a wired connection to a power outlet provides uninterrupted power supply and no need to change batteries. Having a battery-powered motorized roller blind means that the motorized roller blind may be used even during a power outage and that there is no need for an unsightly electrical cable connecting the motorized roller blind to a power outlet.

In US 2014/305602 A1, which discloses the features of the preamble of claim 1, a battery powered roller shade is presented

The roller shade comprises a battery compartment that is pivotally supported by a housing of the roller shade. The battery compartment is operated between an opened position and a closed position by causing the battery compartment to pivot about a, in a mounted position, horizontal pivot axis.

US 2014/231032 A1 presents a battery-powered roller shade system. The shade system comprises a battery compartment defining a channel for receiving and retaining batteries. The battery compartment defines an access aperture that extends through the compartment body and into the channel. The access aperture is configured such that the batteries can be removed through the access aperture by pushing the battery along the channel via an access opening. When the battery compartment is full of batteries, the last battery is across the access aperture and biases the batteries inside the channel, thereby preventing them from falling out.

One problem with commonly available battery-powered motorized roller blinds is with inconvenience during a change of batteries. For example, the motorized roller blind may be arranged at a position which is unreachable for a user without using a ladder. Furthermore, repeated change of batteries may cause certain components in the motorized roller blind to fail.

### Summary of the Invention

An object of the present invention is therefore to alleviate the abovementioned problems and provide a motorized roller blind comprising a novel and inventive battery compartment.

The above and other objects which will be evident from the following description are achieved by a motorized roller blind according to the present invention.

According to a first aspect of the present invention, a motorized roller blind is provided, said motorized roller blind comprising:
a headrail and a motorized roller,
wherein said headrail comprises a battery compartment for holding a battery configured to drive said motorized roller,
wherein said battery compartment comprises a battery space, a closable lid movable between a closed position in which said battery space is closed from the surroundings and an open position in which said battery space is opened to the surroundings, and a battery tray arranged to hold a battery,
wherein said battery tray is rigidly connected to said closable lid, thus providing easy access to the battery when said lid is in its open position,
wherein said battery tray comprises a substantially horizontal surface (106) arranged to support a battery, and
wherein said closable lid is pivotable about a vertical pivot axis between said closed position and said open position.

A headrail is to be understood as being a housing for holding components of a roller blind, for example for holding a motorized roller of a motorized roller blind.

Said battery tray being rigidly connected to said closable lid is to be understood as meaning that said battery tray is welded thereto, or that said battery tray is connected to said closable lid by means of a friction fit, a snap fit, or by means of conventional fasteners such as screws or bolts. Alternatively, said battery tray being rigidly connected to said closable lid may be understood as meaning that said battery tray and said closable lid are integrally formed with each other, i.e. made from a single piece. By having the battery tray rigidly connected to the closable lid, a more robust and reliable structure is provided. Thus, there is less risk for breakage of parts, and the expected lifetime of the motorized roller blind is therefore increased. Furthermore, reliability of the battery holding functionality of the battery tray is increased, as the risk of the battery tray detaching from the closable lid is decreased.

The battery tray comprising a substantially horizontal surface should be understood as meaning that at least a portion of the battery tray is horizontal, such that a battery may rest thereon. According to one exemplary embodiment, a portion of said battery tray is shaped in an inverted image of a battery that is to be held by said battery tray.

A substantially horizontal surface is to be understood as meaning a surface that is substantially perpendicular to the gravitational direction when the headrail of the present invention is mounted on a wall such that it is ready for its intended use.

This enables secure placement of the battery on said battery tray, such that there is little risk of the battery sliding off unexpectedly.

According to one exemplary embodiment of the present invention, the battery tray and the closable lid are integrally formed with each other, i.e. they are made from a single piece.

By making the battery tray and the closable lid from a single piece, costs associated with the assembly of the motorized roller blind may be reduced.

According to one exemplary embodiment, said headrail comprises a first end and a second end, and said battery compartment is arranged adjacent to said first end of said headrail.

According to one exemplary embodiment, said battery compartment comprises a battery connector, wherein said battery connector is in electrical connection with said motorized roller. Said electrical connection may for example be by means of a cable or another conductive element.

According to one exemplary embodiment, said motorized roller blind further comprises at least one bracket connected to said headrail.

According to one exemplary embodiment, said motorized roller is rotatably connected to said at least one bracket.

According to one exemplary embodiment, said at least one bracket comprises a first side bracket and a second side bracket, wherein said first and second side brackets are connected to said headrail.

According to one exemplary embodiment, said motorized roller is rotatably connected to said first and second side brackets.

According to one exemplary embodiment, said first side bracket and/or said second side bracket is shaped as a flange extending in a direction that is substantially perpendicular to a longitudinal extension of said headrail.

According to one exemplary embodiment, each one of said first and second side bracket comprises a headrail connecting portion for connecting said respective side bracket to said headrail and a roller connecting portion for connecting said motorized roller to said respective side bracket.

According to one exemplary embodiment, said first side bracket and said second side bracket are mirror images of each other.

According to one exemplary embodiment, said first side bracket and/or said second side bracket are integrally formed with said headrail. Thus, in some embodiments, said battery compartment may additionally be said to be comprised by one of said first and second side brackets.

According to one exemplary embodiment, said first side bracket and/or said second side bracket are connected to said headrail by means of friction fit, a snap fit, or by means of conventional fasteners such as screws or bolts. Additionally or alternatively, at least one of said side brackets is welded to said headrail.

It should be understood that said motorized roller is connected to said side brackets. According to one exemplary embodiment, said first and second side brackets are connected to said first end and said second end of said headrail, respectively. Having the battery compartment arranged adjacent to said first end of said headrail means that the distance between said battery compartment and the point at which said motorized roller connects to said first side bracket is small, thus simplifying the electrical connection between the motorized roller and a battery held in said battery compartment.

According to one exemplary embodiment, said battery compartment is integrally formed with said first side bracket.

According to the invention, said closable lid is pivotable about a vertical pivot axis between said closed position and said open position.

Vertical is to be understood as meaning the direction that is parallel with the gravitational direction when the headrail of the present invention is mounted on a wall such that it is ready for its intended use. By having a vertical pivot axis, very little force is required to move the closable lid from a closed position to an open position. Furthermore, the gravitational force does not bias the closable lid towards either a closed or open position, thus providing the user with full control over the position of the closable lid. This simplifies the procedure of removing or inserting a battery from/into the battery compartment, as both of the user's hands are free to put the battery into its correct position and/or help the user keep his or her balance during the procedure.

According to one exemplary embodiment, said vertical pivot axis is provided adjacent to the side of said battery space that is closest to a first end of said headrail.

A first end is to be understood as being an end portion of said headrail, as measured in a longitudinal direction. The first end portion may for example be the end portion of the headrail adjacent to which said first side bracket is arranged. Thus, the portion of the battery tray located closest to the first side bracket, and thus closest to the point where the motorized roller connects to the side bracket, moves less than the longitudinally opposite side of the battery tray. This enables the battery tray and the closable lid to pivot about a vertical axis that is located close to said first side bracket, which means that electrical connection between the motorized roller and the battery tray and/or said battery connector is simplified.

According to one exemplary embodiment, said battery tray comprises a battery connector for electrically connecting the battery to said motorized roller, said battery connector being arranged adjacent to said vertical pivot joint.

By positioning the battery connector close to the vertical pivot joint, the battery connector moves less as the closable lid opens and closes. As previously mentioned, the battery connector is arranged in electrical connection with the motorized roller. This could for example be by means of a cable or another conductive element. Since the battery connector moves less when placed close to the vertical pivot joint, there is less wear on the cable or conductive element that connects the battery connector with the motorized roller. This increases the predicted lifetime of the motorized roller blind, and decreases the frequency of unexpected failures due to the electrical connection breaking.

According to one exemplary embodiment, said battery tray comprises a through-hole extending therethrough.

According to one exemplary embodiment, said through-hole comprises a circumferential ledge extending at least partly around said through-hole, said circumferential ledge being arranged to support a battery. Thus, a battery that is connected to said battery connector and/or held on said battery tray may be supported by the circumferential ledge that extends around said through-hole.

By providing the battery tray with a through-hole, a user of the motorized roller blind may remove a battery from the battery tray by pushing his or her finger through the through-hole of the battery tray and thus lifting the battery that is placed thereon. This allows for easy removal of a battery, while simultaneously allowing the battery tray to provide a reliable placement and holding of the battery.

According to one exemplary embodiment, said battery connector is arranged such that removal or disengagement of a battery therefrom is enabled by lifting a portion of said battery from said battery tray. Thus, said through-hole may provide a user with an easy and convenient way of removing or disengaging the battery from the battery connector.

According to one exemplary embodiment, said closable lid comprises a snap-fit closing device for locking the closable lid in a closed position.

Having a snap-fit closing device for closing the lid is beneficial as the snap-fit closing device may be integrally made with the closable lid. Furthermore, if said closable lid is provided with a snap-fit closing device, then opening said closable lid using only one hand is possible. This increases the usability of the motorized roller blind, as it becomes easier for a user to open the closable lid to replace the battery held therein.

According to one exemplary embodiment, said motorized roller comprises a roller body extending longitudinally in a direction between said first and second end of said headrail, and a motor, said motor being positioned inside said roller body in a position adjacent to said first end of said head rail.

According to one exemplary embodiment, said motor is configured to be connected to and powered by the battery.

According to one exemplary embodiment, said battery tray is extending in a vertical direction. In the closed position, the battery tray may be arranged to support the battery in an upright position.

According to one exemplary embodiment, said battery compartment is arranged at an end portion of the headrail. Said battery compartment may be extend in a vertical direction outside the extensional direction of the blind.

According to one exemplary embodiment, said battery tray is slidably arranged in relation to the headrail between said open and closed position. The slideable arrangement may be understood to function as a drawer.

According to one exemplary embodiment, said motorized roller blind is a vertical curtain. Said vertical curtain may be understood to comprise one or several vertical blind portions arranged to be moved sideways.

### Brief description of the drawings

The above, as well as additional objects, features and advantages of the present invention, will be better understood through the following illustrative and non-limiting detailed description of exemplary embodiments of the present invention, with reference to the appended drawing, wherein:
Figure 1 is a perspective view of a section of the motorized roller blind according to one exemplary embodiment of the present invention, showing the closable lid in the open position,
Figure 2 is a perspective view of a section of the motorized roller blind according to one exemplary embodiment of the present invention, showing the closable lid in the open position with a battery placed on the battery tray,
Figure 3 is a perspective view of the motorized roller blind according to one exemplary embodiment of the present invention, showing the closable lid in the closed position,
Figure 4 is a front view of a section of the motorized roller blind according to one exemplary embodiment of the present invention, showing the closable lid in the closed position and an electrical connection between the battery compartment and the motorized roller.

### Detailed description of the drawings

In the present detailed description, embodiments of a motorized roller blind according to the present invention are mainly discussed with reference to drawings showing a motorized roller blind with components and portions being relevant in relation to various embodiments of the invention. It should be noted that this by no means limits the scope of the invention, which is also applicable in other circumstances for instance with other types or variants of motorized roller blinds than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

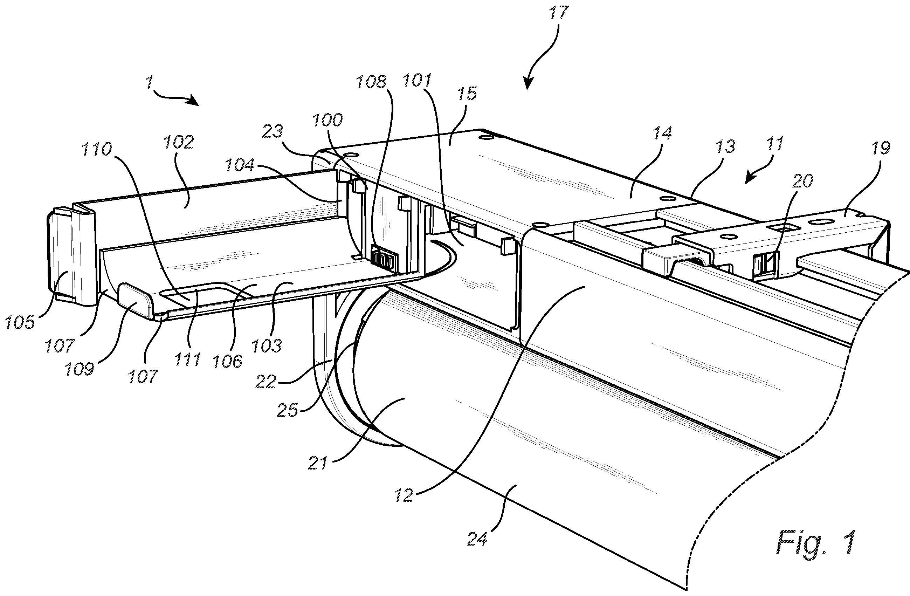

Figure 1 is a perspective view of a section of the motorized roller blind 1 according to one exemplary embodiment of the present invention, showing the closable lid 102 in the open position. The motorized roller blind 1 comprises a headrail 11, alternatively referred to as a housing or base portion, extending in a longitudinal direction. The headrail has a front surface 12, which is the surface intended to face the room in which the motorized roller blind 1 is to be used, a back surface 13, which is the surface arranged to face the wall to which the motorized roller blind 1 is to be connected. The headrail 11 also has an upper surface 14, which is the surface facing in a direction opposite the gravitational direction, when the motorized roller blind 1 is connected to a wall and is ready for use. The headrail 11 is used to hold other components of the motorized roller blind 1, such as the first and second side bracket 15, 16, and a battery compartment 100. These components will be discussed below.

The headrail 11 is an extruded profile made from a suitable material, such as a polymer or aluminum. This enables cheap and efficient manufacturing of the headrail 11. In a longitudinal direction, the headrail 11 has a first end 17 and a second end 18. Figure 1 shows a sectional view of the first end 17 of the headrail 11.

Attached to the headrail 11 are at least two wall mounting means 19 extending in a direction that is substantially perpendicular to the longitudinal extension of the headrail 11. The two wall mounting means 19 are connected to either end 17, 18 of said headrail 11, in addition to any optional wall mounting means that may be connected to a middle portion of the headrail 11. In Figure 1, a single wall mounting means 19 that is connected to the first end 17 of the headrail 11 is shown. The wall mounting means 19 are attached to the headrail 11 by conventional fastening means 20, such as snap-fittings, screws, friction fittings, rotational locks, or similar fastening means. The wall mounting means 19 are then attached to the wall by screws, nails or by means of connection with an intermediate wall connector.

The motorized roller blind 1 further comprises a first and a second side bracket 15, 16. The first side bracket 15 is connected to the first end 17 of the headrail 11 and is thus shown in Figure 1, while the second side bracket 16 is not shown herein. The first side bracket 15 is a U-shaped flange extending in a direction that is perpendicular to the longitudinal extension of the headrail 11. The first side bracket 15 may alternatively have a different shape, such as a rectangular shape. The first side bracket 15 is connected to the first end 17 of the headrail 11, and extends in a downward direction therefrom to enable a motorized roller 21 to be connected thereto. The first side bracket 15 comprises a roller connection portion 22 that is located at a portion of the first side bracket 15 that is furthest away from the headrail 11, and a headrail connection portion 23 for connecting the first side bracket 15 to the headrail 11. The second side bracket 16, although not shown in Figure 1, is a mirror image of the first side bracket 15. However, in some embodiments, certain differences between the two side brackets 15, 16 may be present.

The motorized roller blind 1 further comprises a motorized roller 21 rotatably connected to the first and second side brackets 15, 16. The motorized roller 21 comprises a roller body 24, a motor 25, and connection means for rotatably connecting the motorized roller 21 to the side brackets 15, 16. The motor 25 may be a standard battery-powered electric motor configured for rotational movement of a drive axis. Connected to the motor 25 is a control unit for receiving a control signal from a user of the motorized roller blind, thus allowing a user to control whether the blind should be rolled up or rolled down. The signal may for example be a wireless signal from a wireless roller blind controller, or it may be a wired signal caused by a user pressing buttons on the motorized roller blind. The wireless signal may for example be utilizing the Zigbee-standard communication protocol. The roller body 24 is a cylindrical element onto which a blind is rolled, so that the length of the blind may be increased or decreased, depending on which direction the roller body is rotated. The roller body 24 is connected to the motor 25, such that a rotational movement of the roller body 24 may be actuated by the motor 25.

The headrail 11 further comprises a battery compartment 100 arranged to hold a battery 26 that is used to power the motorized roller blind 1. The battery compartment 100 shown in Figure 1 is formed as part of the first side bracket 15, and comprises a battery space 101 for accommodating a battery 26, a closable lid 102 for closing the battery space 101 from a surrounding environment, and a battery tray 103 rigidly connected to the closable lid 102.

The battery space 101 is a substantially rectangular space or recession extending from the front surface 12 of the headrail 11 and inwards. The battery space 101 is arranged such that sufficient room is provided for housing the battery 26, a portion of the closable lid 102, and the battery tray 103. Additionally, the battery space 101 is sized such that an airflow around the battery 26 is enabled, thus providing a passive means of cooling the battery 26 when the motorized roller blind 1 is used.

The closable lid 102 is connected to the headrail 11 with a vertically oriented pivot joint 104, which allows the closable lid 102 to pivot about a vertical axis between the closed position and the open position. The vertically oriented pivot joint 104 is provided at the front surface 12 of the headrail 11, and at the side of the battery space 101 that is closest to the first end 15 of the headrail 11. The closable lid 102 comprises a snap-fit locking device 105 for locking the closable lid 102 in the closed position. The battery space 101 comprises a corresponding recess for receiving the snap-fit locking device 105, thus locking the closable lid 102 in place in a closed position.

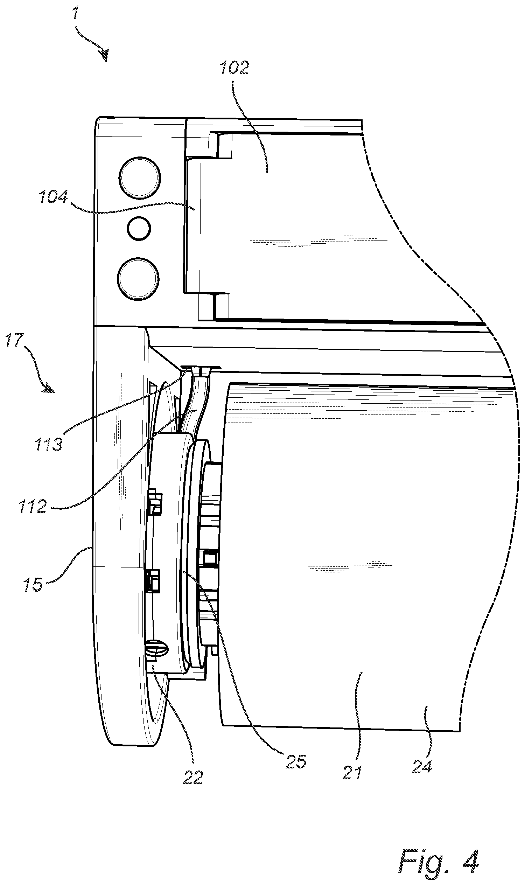

Rigidly connected to the closable lid 102 is the battery tray 103, which comprises a horizontal surface 106 for holding the battery 26, and a two curved surfaces 107 on either side of the horizontal surface 106, each of which is shaped such that they follow the shape of the battery 26 that is used to power the motorized roller blind 1. The curved surfaces 107 allow for a better and more reliable placement of the battery 26 on the battery tray 103, as the risk of the battery 26 sliding off a side of the battery tray 103 is decreased. Furthermore, the battery tray 103 comprises a battery connector 108 for electrically connecting the battery 26 to the motor 25 of the motorized roller 21. This battery connector 108 is arranged adjacent to an area of the battery tray 103 that is closest to the vertically oriented pivot joint 104. The electrical connection between the battery connector 108 and the motorized roller 21 is shown in more detail in Figure 4. The battery tray 103 also comprises a vertical blocking ledge 109 arranged at the side of the battery tray 103 that is located farthest away from the vertically oriented pivot joint 104, i.e. the vertical blocking ledge 109 is arranged opposite said battery connector 108. The vertical blocking ledge 109 prevents the battery 26 from sliding off the battery tray 103 due to centripetal forces caused by the closable lid 102 opening or closing, as a short end of the battery 26 rests against the vertical blocking ledge 109 when connected to the battery connector 108. The battery tray 103 further comprises a through-hole 110 located on said horizontal surface 106. This through-hole 110 enables a user to eject a battery 26 connected to the battery connector 108 by pushing a finger through the through-hole 110, thereby lifting the battery 26. Around the through-hole 110 is a circumferential ledge 111, upon which the battery 26 rests when placed on the battery tray 103.

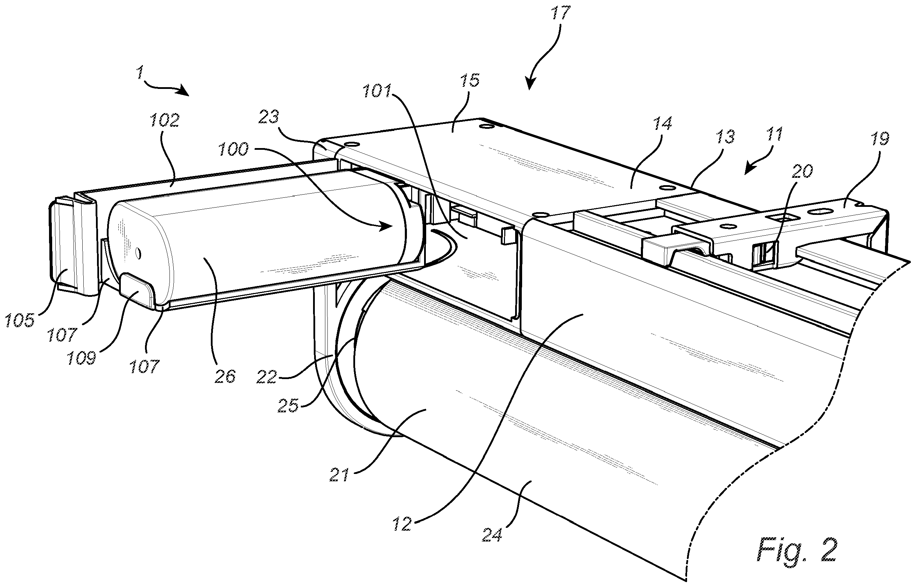

Figure 2 is a perspective view of a section of the motorized roller blind 1 according to one exemplary embodiment of the present invention, showing the closable lid 102 in the open position with a battery 26 placed on the battery tray 103. Here, it is clearly seen how the horizontal surface 106, the curved surfaces 107, and the vertical blocking ledge 109 of the battery tray 103 keeps the battery 26 in place by abutting the sides of the battery 26.

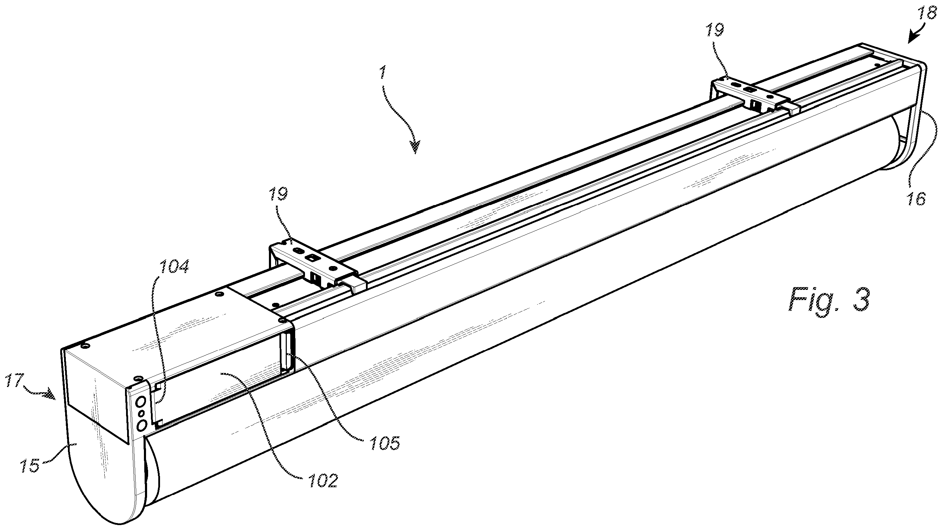

Figure 3 is a perspective view of the motorized roller blind 1 according to one exemplary embodiment of the present invention, showing the closable lid 102 in the closed position. Shown herein is a full view of the motorized roller blind 1 of one embodiment of the present invention. The headrail 11 comprises a second end 16, and a second side bracket 18 and a second wall mounting device 19 connected to the headrail 11 is shown. Compared to Figures 1-2, the closable lid 102 in Figure 3 has pivoted about its vertically oriented pivot joint 104 such that it is in the closed position. Furthermore, the snap fit closing device 105 has engaged the corresponding recess on the inside of the battery space 101 such that the closable lid 102 is locked in place in the closed position. Here, the battery 26 is kept securely connected to the battery connector 108 while simultaneously being readily available for a user of the motorized roller blind 1.

Figure 4 is a front view of a section of the motorized roller blind 1 according to one exemplary embodiment of the present invention, showing the closable lid 102 in the closed position and an electrical connection between the battery compartment 100 and the motorized roller 21. From the battery space 101 there extends an electrical connector, herein illustrated as a cable 112, to said motor 25 of said motorized roller 21. The cable 112 extends from the motor 25 located on said motorized roller 21 in a position adjacent to the first side bracket 15, through a through-hole 113 in the battery space 101, where it then connects to the battery connector 108. The battery connector 108 and the vertically oriented pivot joint 104 are located so that the distance between the two is small, as measured along a longitudinal axis of the motorized roller blind 1. Similarly, the through-hole 113 through which the cable 112 extends is also located in a position near the battery connector 108 and the vertically oriented pivot joint 104 of the closable lid 102. This means that there is little relative movement of the components as the closable lid 102 moves between the open and the closed position, which in turn decreases the amount of wear and tear on the cable 112.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. Furthermore, any reference signs in the claims should not be construed as limiting the scope.

## Claims

1. A motorized roller blind (1), said motorized roller blind (1) comprising:
a headrail (11) and a motorized roller (21),
wherein said headrail (11) comprises a battery compartment (100) for holding a battery (26) configured to drive said motorized roller (21),
wherein said battery compartment (100) comprises a battery space (101), a closable lid (102) movable between a closed position in which said battery space (101) is closed from the surroundings and an open position in which said battery space (101) is opened to the surroundings, and a battery tray (103) arranged to hold the battery (26),
wherein said battery tray (103) is rigidly connected to said closable lid (102), thus providing easy access to the battery when said lid (102) is in its open position,
wherein said battery tray (103) comprises a substantially horizontal surface (106) arranged to support a battery (26), and
**characterized by** that said closable lid (102) is pivotable about a vertical pivot axis (104) between said closed position and said open position.

2. A motorized roller blind (1) according to claim 1, wherein said battery tray (103) comprises a battery connector (108) for electrically connecting the battery (26) to said motorized roller (21).

3. A motorized roller blind (1) according to claim 1 or 2, wherein said vertical pivot axis is provided adjacent to the side of said battery space (101) that is closest to a first end (17) of said headrail (11).

4. A motorized roller blind (1) according to any one of claims 2 or 3, wherein said battery connector (108) is arranged adjacent to said vertical pivot joint.

5. A motorized roller blind (1) according to any one of the preceding claims, wherein said closable lid (102) comprises a snap-fit closing device (105) for locking the closable lid (102) in a closed position.

6. A motorized roller blind (1) according to any one of the preceding claims, further comprising at least one bracket (15, 16) connected to said headrail (11).

7. A motorized roller blind (1) according to claim 6, wherein said at least one bracket (15, 16) comprises a first side bracket (15) and a second side bracket (16), wherein said first and second side brackets (15, 16) are connected to said headrail (11).

8. A motorized roller blind (1) according to any one of the preceding claims, wherein said motorized roller (21) comprises a roller body (24) extending longitudinally in a direction between a first end (17) and a second end (18) of said headrail (11), and a motor (25), said motor (25) being positioned inside said roller body (24) in a position adjacent to said first end (17) of said headrail (11).

## Patentansprüche

1. Motorisiertes Rollo (1), wobei das motorisierte Rollo (1)
umfasst:
eine Kopfschiene (11) und eine motorisierte Rolle (21), wobei die Kopfschiene (11) ein Batteriefach (100) umfasst, um eine Batterie (26) aufzunehmen und zum Antrieb der motorisierten Rolle (21) konfiguriert ist,
wobei das Batteriefach (100) einen Batterieraum (101), einen verschließbaren Deckel (102), der zwischen einer geschlossenen Position, in der der Batterieraum (101) von der Umgebung abgeschlossen ist, und einer geöffneten Position, in der der Batterieraum (101) zur Umgebung hin geöffnet ist, bewegbar ist, und einen Batterieträger (103), der zum Halten der Batterie (26) angeordnet ist, aufweist,
wobei der Batterieträger (103) starr mit dem verschließbaren Deckel (102) verbunden ist, wodurch ein einfacher Zugang zu der Batterie ermöglicht wird, wenn sich der Deckel (102) in seiner geöffneten Position befindet,
wobei der Batterieträger (103) eine im Wesentlichen horizontale Fläche (106) aufweist, die zum Tragen einer Batterie (26) angeordnet ist, und
**dadurch gekennzeichnet, dass** der verschließbare Deckel (102) um eine vertikale Schwenkachse (104) zwischen der geschlossenen Position und der geöffneten Position schwenkbar ist.

2. Motorisiertes Rollo (1) nach Anspruch 1, wobei der Batterieträger (103) einen Batterieverbinder (108) zum elektrischen Verbinden der Batterie (26) mit dem motorisierten Rollo (21) umfasst.

3. Motorisiertes Rollo (1) nach Anspruch 1 oder 2, wobei die vertikale Schwenkachse neben der Seite des Batterieraums (101) vorgesehen ist, die einem ersten Ende (17) der Kopfschiene (11) am nächsten ist.

4. Motorisiertes Rollo (1) nach einem der Ansprüche 2 oder 3, wobei der Batterieverbinder (108) neben dem vertikalen Drehgelenk angeordnet ist.

5. Motorisiertes Rollo (1) nach einem der vorhergehenden Ansprüche, wobei der verschließbare Deckel (102) eine Schnappverschlussvorrichtung (105) zum Verriegeln des verschließbaren Deckels (102) in einer geschlossenen Position aufweist.

6. Motorisiertes Rollo (1) nach einem der vorangehenden Ansprüche , das ferner mindestens eine mit der Kopfschiene (11) verbundene Halterung (15, 16) aufweist.

7. Motorisiertes Rollo (1) nach Anspruch 6, wobei die mindestens eine Halterung (15, 16) eine erste Seitenhalterung (15) und eine zweite Seitenhalterung (16) umfasst, wobei die erste und die zweite Seitenhalterung (15, 16) mit der Kopfschiene (11) verbunden sind.

8. Motorisiertes Rollo (1) nach einem der vorhergehenden Ansprüche, wobei die motorisierte Rolle (21) einen Rollenkörper (24) aufweist, der sich in Längsrichtung in einer Richtung zwischen einem ersten Ende (17) und einem zweiten Ende (18) der Kopfschiene (11) erstreckt, und einen Motor (25), wobei der Motor (25) im Inneren des Rollenkörpers (24) in einer Position neben dem ersten Ende (17) der Kopfschiene (11) angeordnet ist.

## Revendications

1. Store à rouleau motorisé (1), ledit store à rouleau motorisé (1) comprenant :
un caisson (11) et un rouleau motorisé (21),
dans lequel ledit caisson (11) comprend un compartiment de batterie (100) pour contenir une batterie (26) configurée pour entraîner ledit rouleau motorisé (21),
dans lequel ledit compartiment de batterie (100) comprend un espace de batterie (101), un couvercle refermable (102) mobile entre une position fermée à laquelle ledit espace de batterie (101) est fermé de l'environnement et une position ouverte à laquelle ledit espace de batterie (101) est ouvert à l'environnement, et un plateau de batterie (103) agencé pour contenir la batterie (26),
dans lequel ledit plateau de batterie (103) est relié rigidement audit couvercle refermable (102), en fournissant ainsi un accès facile à la batterie lorsque ledit couvercle (102) est à sa position ouverte,
dans lequel ledit plateau de batterie (103) comprend une surface sensiblement horizontale (106) agencée pour soutenir une batterie (26), et
**caractérisé en ce que** ledit couvercle refermable (102) peut pivoter autour d'un axe de pivot vertical (104) entre ladite position fermée et ladite position ouverte.

2. Store à rouleau motorisé (1) selon la revendication 1, dans lequel ledit plateau de batterie (103) comprend un connecteur de batterie (108) pour relier électriquement la batterie (26) audit rouleau motorisé (21).

3. Store à rouleau motorisé (1) selon la revendication 1 ou 2, dans lequel ledit axe de pivot vertical est prévu adjacent au côté dudit espace de batterie (101) qui est le plus proche d'une première extrémité (17) dudit caisson (11).

4. Store à rouleau motorisé (1) selon la revendication 2 ou 3, dans lequel ledit connecteur de batterie (108) est agencé adjacent à ladite articulation de pivot vertical.

5. Store à rouleau motorisé (1) selon l'une quelconque des revendications précédentes, dans lequel ledit couvercle refermable (102) comprend un dispositif de fermeture par encliquetage (105) pour verrouiller le couvercle refermable (102) à une position fermée.

6. Store à rouleau motorisé (1) selon l'une quelconque des revendications précédentes, comprenant en outre au moins un support (15, 16) relié audit caisson (11).

7. Store à rouleau motorisé (1) selon la revendication 6, dans lequel ledit au moins un support (15, 16) comprend un premier support latéral (15) et un deuxième support latéral (16), dans lequel lesdits premier et deuxième supports latéraux (15, 16) sont reliés audit caisson (11).

8. Store à rouleau motorisé (1) selon l'une quelconque des revendications précédentes, dans lequel ledit rouleau motorisé (21) comprend un corps de rouleau (24) s'étendant longitudinalement dans une direction entre une première extrémité (17) et une deuxième extrémité (18) dudit caisson (11), et un moteur (25), ledit moteur (25) étant positionné à l'intérieur dudit corps de rouleau (24) à une position adjacente à ladite première extrémité (17) dudit caisson (11).
